# EUROPEAN PATENT APPLICATION

(11) **EP 2 133 842 A1**
(43) Date of publication of application: **16.12.2009**
(21) Application number: 08722767.4
(22) Date of filing: 25.03.2008
(51) Int. Cl.: G06T 15/00, A63F 13/00, G06T 17/40

(54) **IMAGE GENERATING APPARATUS, IMAGE PROCESSING METHOD, INFORMATION RECORDING MEDIUM, AND PROGRAM**

(30) Priority: 30.03.2007 JP 2007093127
(71) Applicant: Konami Digital Entertainment Co., Ltd., Tokyo 107-8324 (JP)
(72) Inventor: NOMURA, Takehiro, Tokyo 107-8324 (JP)
(74) Representative: Epping, Wilhelm
(86) International application number: PCT/JP2008/055557
(87) International publication number: WO 2008/120612

(57) **Abstract**

A duplicate generating section (240) generates, from obtained object information, a duplicate object whose shape (behavior) is identical to that of the current one of an enemy character. An object placing section (250) reduces the duplicate object based on the distance from a viewpoint to the enemy character (the corresponding enemy character), the angle of view, etc. The object placing section (250) in turn places the duplicate object, e.g., on the clip surface at the forefront of the viewable region (view frustum). A contour image generating section (260) extracts a contour from the duplicate object by a dedicated shader and generates a contour image. An image rendering section (270) renders images of all objects, including a contour object at the forefront.

## Description

### Technical Field

The present invention relates to an image generating apparatus, an image processing method, an information recording medium, and a program for displaying images that enhance understanding of the game situation while properly mitigating the processing load.

### Background Art

Display of many kinds of images to enhance understanding of the game situation has traditionally been used in 3D action and sports games, etc. For example, a radar screen (radar map), in which the positions of the player character (proponent character), the enemy character, etc. are indicated, is overlaid on a game image (an image viewable during game play) for display.
The player can recognize, for example, where the enemy character is positioned, the distance thereto, and the like from this kind of radar screen, so that the user can understand the overall game situation that is difficult to understand by just looking at the display of the game image.

One example of such a technique applied to a video game (game system) is disclosed (see, e.g., Patent Literature 1). In this example, a radar screen (radar map), for which the display range, etc. are changed according to the playing situation, is displayed during the succor game.
Patent Literature 1: Unexamined Japanese Patent Application KOKAI Publication H11-128538 (pages 4-7 and FIG. 4).

### Disclosure of Invention

### Problem to be Solved by the Invention

On the abovementioned radar screen, the characters are represented by simple symbols, etc. The player looking at the radar screen can understand the positions of the characters, etc, but the player cannot guess the behavior of each character (how each character is moving, etc.).
Some radar screens are displayed by changing colors and shapes of symbols according to the conditions (status, etc.) of the characters, but such screens were simple and uninteresting. It was possible to understand the status, etc, but not the character behavior.

To let the player know the character behavior, the so-called animation display can be performed - i.e., symbols and the like simulating the characters moving together with the characters on the radar screen.
However, complicated animation display required dedicated rendering processes, such as integration thereof into a pre-rendered moving image playing feature and dynamic texture generation. Also, performing such dedicated rendering processes resulted in a greater processing load.
When integrated into moving image playing, the contents of animation display were limited (to a few), thereby deteriorating interactive features. Dynamic texture generation increased hardware requirements to a significant extent, so not many types of machines were available for such use (reduced usability), and a memory capacity requirement was a problem as well.

To address the above, there was a call for a technique for displaying images whose behavior is identical to those of characters while properly mitigating the processing load.

The present invention is made to solve the above problems. An object of the present invention is to provide an image generating apparatus, an image processing method, an information recording medium, and a program for display images that enhance understanding of the game situation while properly mitigating the processing load.

### Means for Solving the Problem

An image generating apparatus according to a first aspect of the present invention comprises a duplicate generating section, an object placing section, a contour generating section, and an image rendering section.

The duplicate generating section generates a duplicate object from a specific object (e.g., an enemy character) placed in a virtual 3D space. The object placing section reduces the duplicate object thus generated based at least on a distance from a viewpoint position to the specific object and places the reduced duplicate object near the viewpoint position. From the duplicate object thus placed, the contour generating section generates a contour image with reference to the viewpoint position. The image rendering section renders a display image in which the contour image thus generated is overlaid on the specific object.

In this way, the duplicate object is reduced and placed at the forefront, and a game image is generated by overlying the contour image, which is a contour extracted from the duplicate object, on an enemy character. This contour image is always displayed at the forefront and moves together exactly with the specific object (they are overlaid with each other during the movement). Even when the player cannot see the specific object hidden behind a hiding object, the player can know the behavior of the specific object from the contour image thereof, which enhances understanding of the game situation. Since no dedicated processes need to be added to the conventional rendering system, the processing load can be properly mitigated.
As a result, an image that enhances understanding of the game situation can be displayed while properly mitigating the processing load.

The duplicate generating section may generate a duplicate object which is identical to the specific object. The object placing section may reduce the duplicate object according to the line of sight direction, the angle of view, and other conditions using the viewpoint position as a reference and place the duplicate object at the forefront with respect to the viewpoint position.
In this case, even when the position of the specific object in the virtual space is different from that of the duplicate object, upon rendering of the duplicate object, it can be placed such that it is congruently overlaid on (in agreement with) the specific project.

The image generating apparatus described above may further comprise a rendering control section that controls the object placing section, the contour generating section, and the image rendering section at least in every rendering cycle.
In this case, each process is performed in a rendering cycle (e.g., every 1/60 second), and a movement identical to that of the specific object can be animated by a contour image for display.

The object placing section may comprise a reducing section and a placing section. The reducing section reduces the duplicate object generated by the duplicate generating section based at least on the distance from the viewpoint position to the specific object. The placing section places the reduced duplicate object at a specific position near the viewpoint position.
In this case, even if the position of the duplicate object placed in the virtual space differs from the position where the specific object is placed, upon rendering of the duplicate object, it can be placed such that it is congruently overlaid on (in agreement with) the specific project.

An image processing method according to a second aspect of the present invention comprises a duplicate generating step, an object placing step, a contour generating step, and an image rendering step.

At the duplicate generating step, a duplicate object is generated from a specific object placed in a virtual 3D space (e.g., an enemy character). At the object placing step, the generated duplicate object is reduced based at least on a distance from a viewpoint position to the specific object and placed near the viewpoint position. At the contour generating step, from the duplicate object thus placed, a contour image is generated with reference to the viewpoint position. At the image rendering step, a display image is rendered by overlaying the generated contour image on the specific object.

In this way, the duplicate object is reduced and placed at the forefront, and a game image is generated by overlying the contour image, which is a contour extracted from the duplicate object, on an enemy character. This contour image is always displayed at the forefront and moves together exactly with the specific object (they are overlaid with each other during the movement). Even when the player cannot see the specific object hidden behind a hiding object, the player can know the behavior of the specific object from the contour image thereof, which enhances understanding of the game situation. Since no dedicated processes need to be added to the conventional rendering system, the processing load can be properly mitigated.
As a result, an image that enhances the understanding of the game situation can be displayed while properly mitigating the processing load.

An information recording medium according to a third aspect of the present invention stores a program that causes a computer (such as an electronic device) to act as the foregoing image generating apparatus.

A program according to a fourth aspect of the present invention causes a computer (such as an electronic device) to act as the foregoing image generating apparatus.

The program can be recorded in a computer-readable information recording medium, such as a compact disk, a flexible disk, a hard disk, a magnetic optical disk, a digital video disk, a magnetic tape, or a semiconductor memory, etc.

The program can be distributed or sold via the computer communication network, separately from a computer in which the program is executed. The information recording medium can be distributed or sold separately from such a computer as well.

### Effect of the Invention

According to the present invention, an image that enhances understanding of the game situation can be displayed while properly mitigating the processing load.

### Brief Description of Drawings

FIG. 1 is a schematic diagram presenting a general configuration of a game device according to an embodiment of the present invention.
FIG. 2 is a schematic diagram that presents a general configuration of an image generating apparatus according to an embodiment of the present invention.
FIG. 3A is a schematic diagram that explains how a duplication object is contracted.
FIG. 3B is a schematic diagram that explains how a duplication object is contracted.
FIG. 4A is a schematic diagram that explains how a duplication object is placed.
FIG. 4B is a schematic diagram that explains how a duplication object is placed.
FIG. 5A is a schematic diagram that explains a contour image.
FIG. 5B is a schematic diagram that explains a contour image.
FIG. 6 is a schematic diagram that presents a specific example of a game image.
FIG. 7 is a flowchart that presents an example of image generating process according to an embodiment of the present invention.

### Explanation of Reference Numerals

- 100: Game device
- 101: CPU
- 102: ROM
- 103: RAM
- 104: Interface
- 105: Controller
- 106: External memory
- 107: DVD-ROM drive
- 108: Image processing section
- 109: Sound processing section
- 110: NIC
- 200: Image generating apparatus
- 210: Object information storage section
- 220: Input receiving section
- 230: Position managing section
- 240: Duplicate generating section
- 250: Object placing section
- 260: Contour image generating section
- 270: Image rendering section
- 280: Rendering control section

### Best Mode for Carrying Out the Invention

Embodiments of the present invention are explained below. For the ease of understanding, embodiments in which the present invention is applied to a game device are explained. The present invention is also applicable to information processing devices, such as various kinds of computers, PDAs (Personal Data Assistants), and cellular phones. The embodiments explained below are presented for the sake of explanation and in no way limit the scope of the present invention. One of ordinary skill in the art can adopt the embodiments by replacing all or some of the components thereof by their equivalents, and such embodiments are still within the scope of the present invention as well.

### (Embodiment 1)

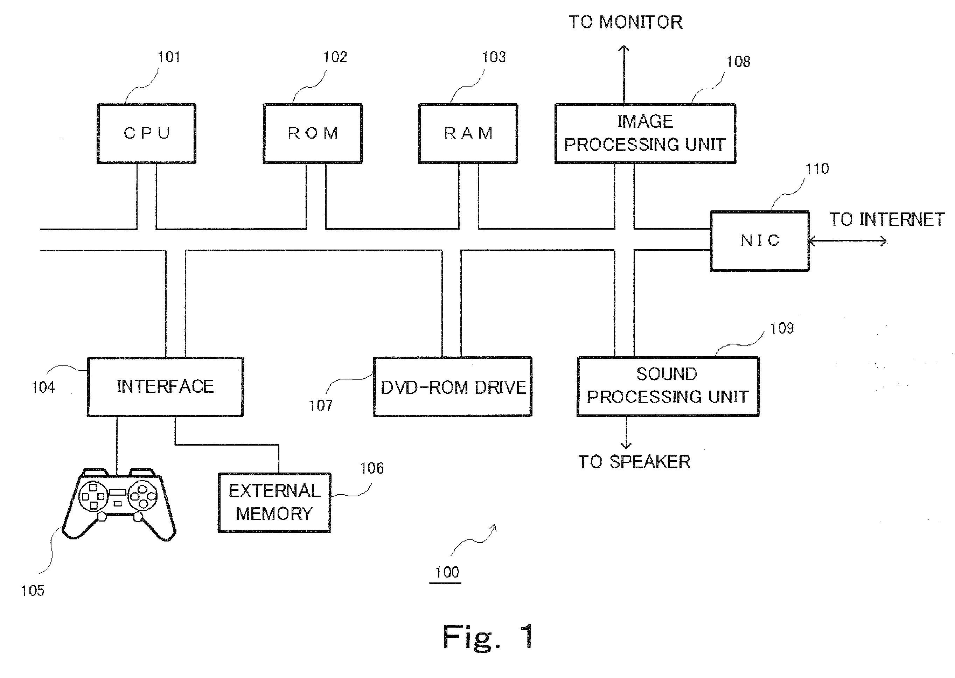

FIG. 1 is a schematic diagram presenting a general configuration of a typical game device in which the image generation apparatus according to this embodiment of the present invention is achieved. This figure is referred to in the explanation to follow.

A game device 100 comprises a CPU (Central Processing Section) 101, a ROM (Read Only Memory) 102, a RAM (Random Access Memory) 103, an interface 104, a controller 105, an external memory 106, a DVD(Digital Versatile Disk)-ROM drive 107, an image processing section 108, a sound processing section 109, and a NIC (Network Interface Card) 110.

By inserting into the DVD-ROM drive 107 a DVD-ROM storing the program and data for the game and turning on the power of the game device 100, the program is launched, and the image generating apparatus according to this embodiment is achieved.

The CPU 101 controls the overall operation of the game device 100 and is connected to other components for exchanging control signals and data.

In the ROM 102, an Initial Program Loader (IPL), which is executed immediately after the power is turned on, is recorded. Upon execution of the IPL, the program recorded in the DVD-ROM is read out to the RAM 103 for execution by the CPU 101. Programs and data of the operating system required for the overall control and operation of the game device 100 are stored in the ROM 102.

The RAM 103 is used for temporary storage of data and programs. The RAM 103 holds the data and programs read out from the DVD-ROM as well as other data needed for the progress of the game and chat communications.

The controller 105, which is connected via the interface 104, receives manipulation inputs from the user for game play. For example, the controller 105 receives inputs of strings (messages), etc. according to manipulation inputs.

The external memory 106 is detachably connected via the interface 104. Data rewritably recorded in the external memory 106 include data on the progress of the game and logs (records) of chat communications. The user can appropriately record such data in the external memory 106 by inputting instructions via the controller 105.

In the DVD-ROM to be mounted on the DVD-ROM drive 107, a program for executing the game as well as image and sound data that accompany therewith are recorded. Under control of the CPU 101, the DVD-ROM drive 107 reads out, from the DVD-ROM mounted thereon, a required program and data. The program and data are stored temporarily in the RAM 103, etc.

The image processing section 108, upon processing of the data read out from the DVD-ROM by an image operation processor (not shown) comprised in the image processing section 108 and the CPU 101, records the data in a frame memory (not shown) comprised in the image processing section 108. The image information recorded in the frame memory is converted into video signals at a predetermined synchronization timing and output to a monitor (not shown) connected to the image processing section 108. Many kinds of image display are thereby enabled.

The image operation processor can perform overlay calculation for 2D images, transparent operations (alpha blending, etc.), and many kinds of saturate calculation at high speeds.
It is also possible to perform a high-speed operation to acquire a rendering image from information on a polygon, which is arranged within a virtual 3D space and to which various kinds of texture information are added. In such an operation, the Z buffer method is used for rendering the information on the polygon to acquire the rendering image in which the polygon in a virtual 3D space can be seen from a predetermined viewpoint position.

Further, by cooperation of the CPU 101 and the image operation processor, a string can be rendered as a 2D image in the frame memory or on each polygon surface according to font information defining text shapes. The font information is recorded in the ROM 102, but dedicated font information recorded in the DVD-ROM can be used as well.

The sound processing section 109 converts, into an analog sound signal, sound data read out from the DVD-ROM and outputs the sound signal from a speaker (not shown) connected thereto. Under control of the CPU 101, the sound processing section 109 generates sound effects and music data to be generated during the game and outputs sounds equivalent thereto from the speaker.

The NIC 110 is used for connecting the game device 100 to a computer communication network (not shown), such as the Internet. The NIC 110 comprises ones compliant with the 10 BASE-T/100 BASE-T standard which is used to configure a LAN (Local Area Network), an analog modem for Internet connection via a telephone circuit, an ISDN (Integrated Services Digital Network) modem, an ADSL (Asymmetric Digital Subscriber Line) modem, a cable modem for Internet connection via a cable television circuit and the like, and an interface (not shown) which intervenes between these modems and the CPU 101.

In addition, the game device 100 may employ a large-capacity external storage device, such as a hard disk, so that the game device 100 has the functions equal to those of the ROM 102, the RAM 103, the external memory 106, a DVD-ROM loaded onto the DVD-ROM drive 107, and the like.
It is also possible to adopt an embodiment in which a keyboard for accepting user input of string editing and a mouse for accepting user input of selecting and indicating positions are connected.

In lieu of the game device 100 according to this embodiment, an ordinary computer (a general personal computer, etc.) can be used as an image generating apparatus. For example, as in the case of the game device 100, an ordinary computer comprises a CPU, a RAM, a ROM, a DVD-ROM drive, a NIC, an image processing section with features not as advanced as those of the game device 100, and a hard disk as an external storage device. It is also designed to be able to use a flexible disk, a magnetic optical disk, a magnetic tape, etc. Input devices employed include not a controller, but a keyboard and a mouse. After the computer is installed with the game program and the program is executed, the computer acts as the image generating apparatus.

### (General configuration of image generating apparatus)

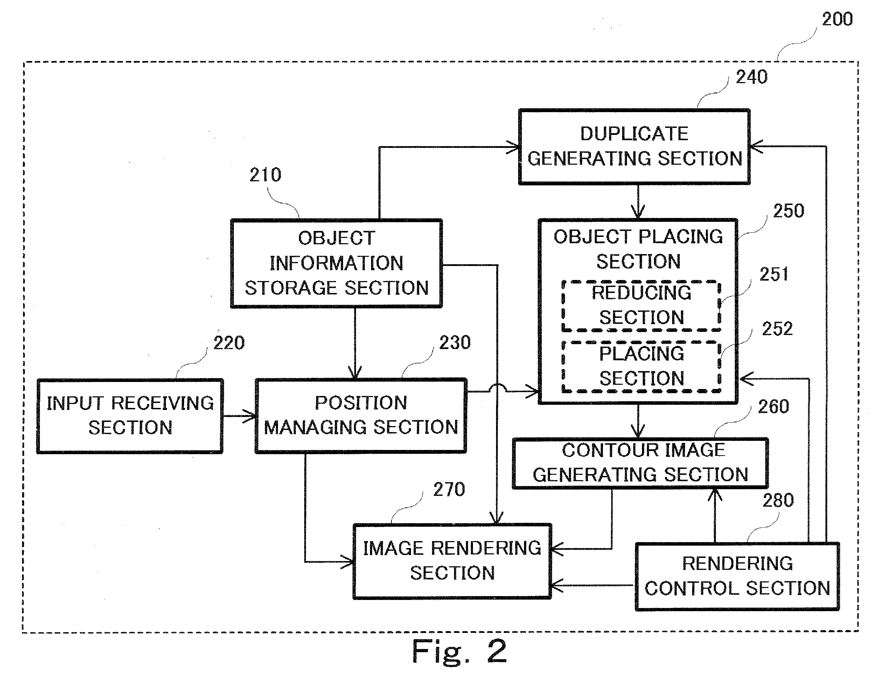

FIG. 2 is a schematic diagram presenting a general configuration of the image generating apparatus according to this embodiment. This image generating apparatus, for example, generates images presenting the behavior of an enemy character (opponent character) in a 3D action game in which the character controlled by the player (player character) infiltrates into the enemy territory and hides therein for intelligence gathering, etc. The text to follow provides further explanations by referring to FIG. 2.

The image generating apparatus 200 comprises an object information storage section 210, an input receiving section 220, a position managing section 230, a duplicate generating section 240, an object placing section 250, a contour image generating section 260, an image rendering section 270, and a rendering control section 280.

The object information storage section 210 stores information on objects placed in a virtual space, such as a player character (a character on the same side), an enemy character, trees, and buildings. More specifically, 3D model information on each object is stored.
The enemy character is a specific object displayed on a radar screen, which will be described later.
The RAM 103 or the like can serve as this object information storage section 210.

The input receiving section 220 accepts inputs, such as instructions to the player's player character regarding what action to make. For example, the input receiving section 220 accepts inputs to manipulate the main character, which the player makes by pressing a plurality of buttons (e.g., direction keys, button A, button B, button X, and button Y provided on the controller 105). These buttons are associated with actions such as moving to a specific direction, pressing against the wall or the like, ducking, and diving to the ground.
The controller 105 can act as the input receiving section 220.

The position managing section 230 manages positional information (current position, direction, etc.) on objects, such as a player character and an enemy character, whose positions change in a virtual space. For example, in response to travel instructions and the like received by the input receiving section 220, the player character changes its position and travel direction in a virtual space so that such positional information is managed by the position managing section 230. The enemy character travels appropriately according to a specific logic and changes its position and the like in a virtual space, so the positional information on the enemy character is likewise managed.
The RAM 103 and the CPU 101 can act as the position managing section 230.

The duplicate generating section 240 generates a duplicate object, which is totally identical to an enemy character, in order to create a radar screen.
More specifically, the duplicate generating section 240 reads out object information on the enemy character from the object information storage section 210 and generates a duplicate object. The data on the generated duplicate object corresponds completely to that on the original object (the enemy character object). In other words, the duplicate object is associated with the enemy character such that when the enemy character moves (makes some kind of movement), the duplicate object is designed to make the same movement simultaneously. The current status (current behavior) of the enemy character is exactly the same as that of the duplicate object.
The duplicate generating section 240 generates this duplicate object by duplicating the object of the enemy character. For duplication, the duplicate generating section 240 may generate duplicate objects, e.g., only from those placed in a region viewable from the viewpoint position.

The object placing section 250 appropriately contracts the duplicate object generated by the duplicate generating section 240 and place it at the position nearest to the viewpoint position (forefront).
More specifically, the object placing section 250 comprises a reducing section 251 and a placing section 252.

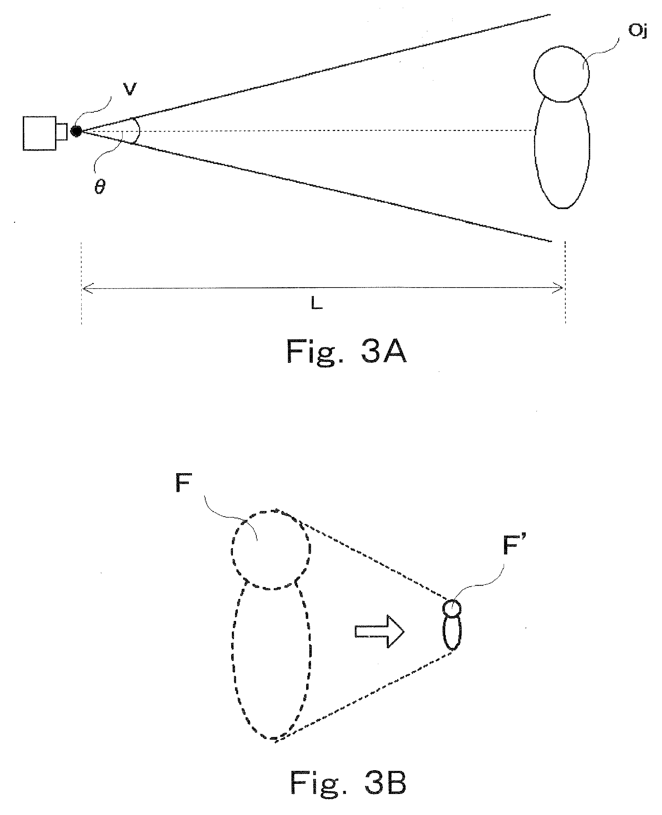

The reducing section 251 reduces the generated duplicate object according to the distance from the viewpoint position to the enemy character, etc.
More specifically, as presented in FIG. 3A, distance L from viewpoint V to enemy character (object) Oj, angle of view θ, and the like are calculated. As presented in Fig. 3B, based on the calculated distance L and angle of view θ, etc., duplicate object F is reduced (here F' stands for a reduced duplicate object).
As described later, when the reduced duplicate object is placed on the clip plane (forefront of the viewable region), the object F is reduced taking into consideration the ratio of the distance between the viewpoint and the clip plane to the distance between the viewpoint and the enemy character, etc.

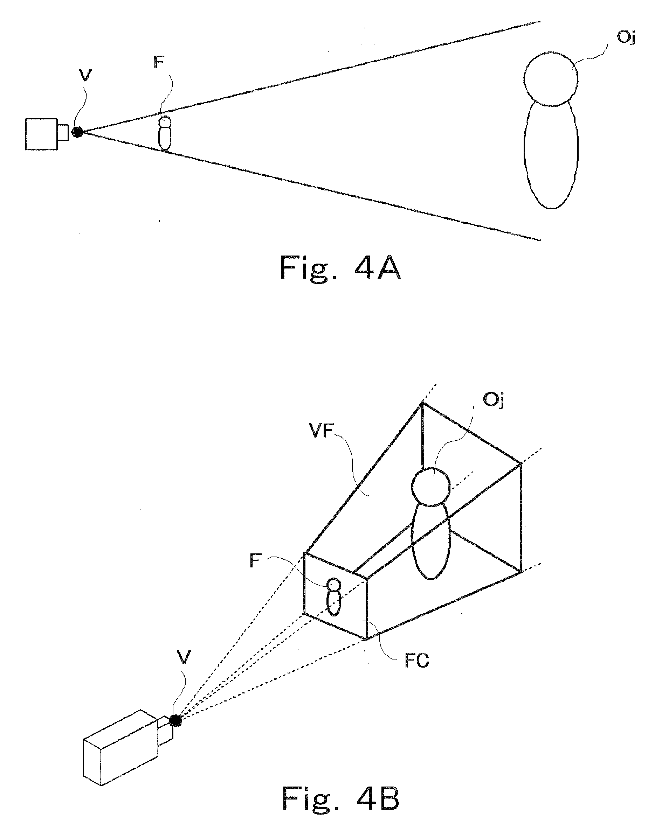

The placing section 252 places the duplicate object, which is reduced by the reducing section 251, at the forefront with respect to the viewpoint.
More specifically, the duplicate object F is placed right in front of viewpoint V, as presented in FIG. 4A, or the duplicate object F is placed on the clip plane FC, which is in front of the viewable region VF, as presented in FIG. 4B.
More specifically, the placing section 252 places the duplicate object at the position nearer to the viewpoint than those of any other objects, so that the duplicate object is at the top (forefront) when it is displayed.

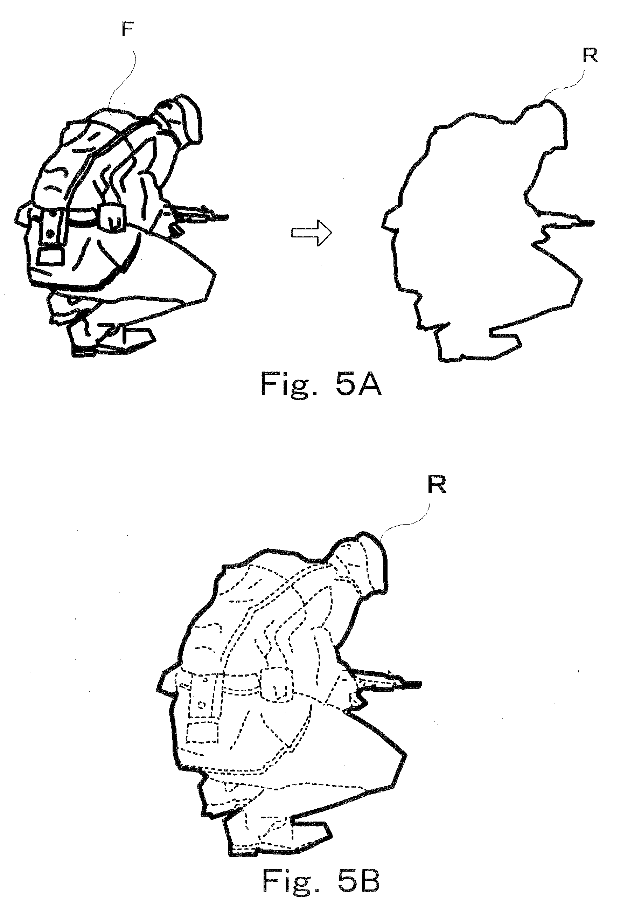

The contour image generating section 260 generates a contour image, which is extracted from a contour of the duplicate object placed at the forefront.
More specifically, as presented in FIG. 5A, contour image (contour object) R, whose contour is extracted by a shader from the duplicate object F (contracted), is generated. The contour image R has its contour painted with a predetermined color (e.g., a fluorescent color), while the other portions thereof are transparent.
The contour image R presented in FIG. 5A is just another example, so it can be appropriately changed. For example, the contour image generating section 260 may generate contour image R presented in FIG. 5B. This contour image R, which is presented in FIG. 5B, in a simple manner represents the duplicate object by a substantially transparent (semi-transparent) line.

In this way, the object placing section 250 places the reduced duplicate object at the position nearest to the viewpoint (position where nothing obstructs the view thereof). The contour image generating section 260 generates a contour image which is extracted from a contour of the duplicate object.

Back to FIG. 2, the image rendering section 270 renders a display image, in which objects in the viewable region, including a contour image generated by the contour image generating section 260, are converted into a viewpoint coordinate system. In other words, a display image, in which such objects are converted into a viewpoint coordinate system, is rendered under the condition where a contour image is overlaid on an enemy character (specific object).

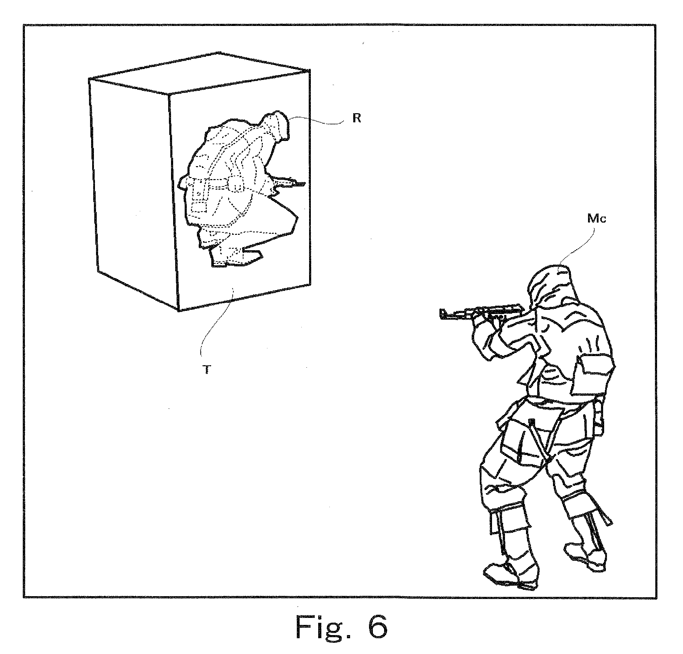

More specifically, the image rendering section 270 renders a display image as the one presented in FIG. 6. This figure presents an example of a rendered display image, which includes an image of player character Mc and the contour image R of an enemy character.
In the figure, the enemy character is hiding behind building T, but the contour image R corresponding thereto is rendered without being hidden behind the building T.
As this contour image R is generated from the enemy character (duplicate object F), as shown in FIG. 5A, etc., the former moves together exactly with the latter (overlaid with each other and move together).
As shown in the display image presented in FIG. 6, the player can see the behavior of the enemy character hidden behind the building T, etc. from the contour image R, so the game situation can be easily understood.

Back to FIG. 2, the rendering control section 280 controls rendering operation (rendering process) by the image generating apparatus 200. More specifically, the rendering control section 280 controls the duplicate generating section 240, the object placing section 250, the contour image generating section 260, and the image rendering section 270 so that a display image is rendered in every rendering cycle.
The image processing section 108 can act as the duplicate generating section 240, the object placing section 250, the contour image generating section 260, the image rendering section 270, and the rendering control section 280.

### (Operation of image generating apparatus)

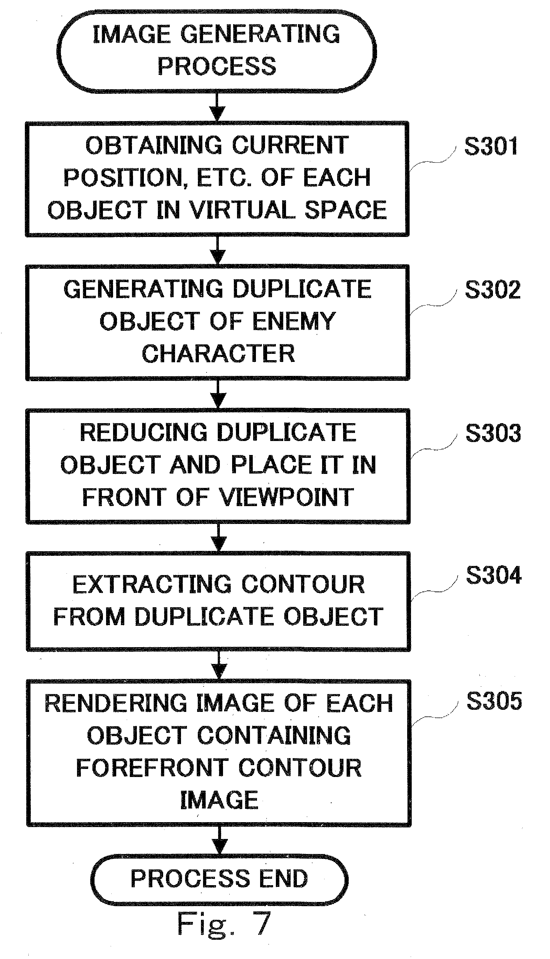

FIG. 7 is a flowchart illustrating a flow of the image generating process performed by the image generating apparatus 200 which has the foregoing features. By referring to this figure, the text to follow explains the operation of the image generating apparatus 200. During the game, this image generating apparatus repeatedly performs the rendering process per each rendering cycle (e.g., 1/60 per second). The duplicate generating section 240, the object placing section 250, the contour image generating section 260, and the image rendering section 270 are controlled by the rendering control section 280 such that a display image is rendered per each rendering cycle.

Firstly, the image generating apparatus 200 obtains the current positions and the like of each object in a virtual space (step S301). More specifically, the current object information on the player character and the enemy character is obtained based on information stored (managed) by the object information storage section 210 and the position managing section 230.

The image generating apparatus 200 generates a duplicate object of the enemy character (step S302).
More specifically, from the obtained object information, the duplicate generating section 240 generates a duplicate object whose shape (behavior) is identical to the current one of the enemy character. If a duplicate object has been generated for some characters, the duplicate generating section 240 may be set to generate only duplicate objects that have not been generated. If a duplicate object has been generated for all the enemy characters, this process may be skipped.

The image generating apparatus 200 reduces the duplicate object and places it in front of the viewpoint (step S303).
More specifically, the object placing section 250 reduces the duplicate object based on the distance from the viewpoint to the enemy character (corresponding enemy character), the angle of view, etc. Then the object placing section 250 places it, e.g., on the clip surface (clip plane) at the forefront of the viewable region.

The image generating apparatus 200 extracts a contour from the duplicate object (step S304).
More specifically, the contour image generating section 260 generates a contour image by extracting a contour from the duplicate object by a dedicated shader.

Next, the image generating apparatus 200 renders images of objects, including a contour image at the forefront (step S305).
More specifically, the image rendering section 270 renders a display image, in which objects in the viewable region, including a contour image placed at the forefront, are converted into a viewpoint coordinate system. In other words, a display image, in which such objects are converted into a viewpoint coordinate system, is rendered under the condition where a contour image is overlaid on an enemy character (specific object).

This image generating process is performed real-time during the game. The contour image (duplicate object), which is contracted for contour extraction, is always placed at the forefront. A game image, in which the contour image is overlaid on the corresponding enemy character, is generated.
Since the contour image is generated from the duplicate object which is a duplicate of the enemy character, the contour image moves together exactly with the enemy character (moving together while being overlaid with each other).
Since the player can see in this image the behavior of the enemy character hiding behind a building, etc., the game situation can be easily understood.

Beyond all things, a dedicated process does not need to be added to the conventional rendering system. The load is not excessive, and there are no requirements for the system environment.
As a 3D-object is a base, complicated animations can be performed along with motion replay of an enemy character and the like.
Only a small space in front of the viewpoint is used, so the overall configuration of the 3D world is not affected.
Also, as in the case of 2D icons, etc., the contour image is always displayed at the forefront without being hidden by a 3D object in the game. It can be always seen as useful information by the player.

As a result, an image for enhancing understanding of the game situation can be displayed while properly mitigating the processing load.

### (Another embodiment)

In the above embodiment, a duplicate object (contour image) is generated using an enemy character as a specific object. Objects can be generated arbitrarily, and they are not limited to the above embodiment.
Examples to which the above embodiment can appropriately be applied include generation of a duplicate object (contour image) from an object out of the bounds of the viewable region of the game so as to additionally perform animation display during the game, etc.

An example below specifically and briefly explains a situation of running an advertisement or the like by having an advertisement character make an appearance during the game (such as a mascot charter for the sponsor which is in principle not supposed to make an appearance during the game).
Prior to the game, the object information storage section 210 stores an advertisement character (object), which has been obtained via data communication or the like. This advertisement character is controlled to properly act according to a specific logic, aside from control performed for the game.

The duplicate generating section 240 reads out object information on the advertisement character from the object information storage section 210 and generates a duplicate object. This duplicate object is completely associated with the advertisement character (object) in terms of data. The movement (gesture, etc.) of the advertisement character is identical to that of the duplicate object.

The object placing section 250 appropriately contracts the generated duplicate object and places it at the position nearest to the viewpoint position (forefront). In this case, since overlaying with the original advertisement character is not necessary (the advertisement character does not exist in the visible region), the contraction ratio, etc. may be set in advance. The contour image generating section 260 extracts a contour from the contracted duplicate object. As in the case as above, a contour image whose contour is extracted by the shader is generated.

The image rendering section 270 renders a display image, in which objects in the viewable region, including a contour image generated by the contour image generating section 260, are converted into a viewpoint coordinate system. More specifically, an image in which a contour image is placed at the forefront is rendered.
By virtue of the contour image, the player can look at advertisements produced by movements (gestures, etc.) of the advertising character during the game.
A priority right for the present application is claimed based on Japanese Patent Application No. 2007-093127, and the contents thereof are incorporated herein in its entirety.

### Industrial Applicability

As explained above, the present invention enables provision of an image generating apparatus, an image processing method, an information recording medium, and a program for displaying images that enhance understanding of the game situation while properly mitigating the processing load.

## Claims

1. An image generating apparatus comprising:
a duplicate generating section (240) that generates a duplicate object from a specific object placed in a virtual 3D space;
an object placing section (250) that reduces the generated duplicate object based at least on a distance from a viewpoint position to the specific object and places the reduced duplicate object near the viewpoint position;
a contour generating section (260) that generates a contour image from the placed duplicate object in reference to the viewpoint position; and
an image rendering section (270) that renders a display image in which the generated contour image is overlaid on the specific object.

2. The image generating apparatus according to claim 1,
wherein the duplicate generating section (240) generates the duplicate object identical to the specific object; and
the object placing section (250) contracts the duplicate object according to a line of sight direction, a viewing angle, and other conditions using the viewpoint position as a reference and places the duplicate object at a forefront with respect to the viewpoint position.

3. The image generating apparatus according to claim 1, further comprising:
a rendering control section (280) that controls the object placing section (250), the contour generating section (260), and the image rendering section (270) at least in every rendering cycle.

4. The image generating apparatus according to claim 1,
wherein the object placing section (250) comprises:
a reducing section (251) that reduces the duplicate object generated by the duplicate generating section (240) based at least on the distance from the viewpoint position to the specific object; and
a placing section (252) that places the reduced duplicate object at a specific position near the viewpoint position.

5. An image processing method comprising:
a duplicate generating step of generating a duplicate object from a specific object placed in a virtual 3D space;
an object placing step of reducing the generated duplicate object based at least on a distance from a viewpoint position to the specific object and placing the reduced duplicate object near the viewpoint position;
a contour generating step of generating a contour image from the placed duplicate object in reference to the viewpoint position; and
an image rendering step of rendering a display image in which the generated contour image is overlaid on the specific object.

6. A computer-readable information recording medium storing a program for controlling a computer to function as:
a duplicate generating section (240) that generates a duplicate object from a specific object placed in a virtual 3D space;
an object placing section (250) that reduces the generated duplicate object based at least on a distance from a viewpoint position to the specific object and places the reduced duplicate object near the viewpoint position;
a contour generating section that generates a contour image from the placed duplicate object in reference to the viewpoint position; and
an image rendering section (270) that renders a display image in which the generated contour image is overlaid on the specific object.

7. A program for controlling a computer to function as:
a duplicate generating section (240) that generates a duplicate object from a specific object placed in a virtual 3D space;
an object placing section (250) that reduces the generated duplicate object based at least on a distance from a viewpoint position to the specific object and places the reduced duplicate object near the viewpoint position;
a contour generating section (260) that generates a contour image from the placed duplicate object in reference to the viewpoint position; and
an image rendering section (270) that renders a display image in which the generated contour image is overlaid on the specific object.
